# EUROPEAN PATENT SPECIFICATION

(11) **EP 4 471 576 B1**
(45) Date of publication and mention of the grant of the patent: **18.02.2026**
(21) Application number: 24176489.3
(22) Date of filing: 17.05.2024
(51) Int. Cl.: G06F 8/38, G06F 8/33, G06F 11/32, G06F 16/25, G06F 11/30, G06F 9/451

(54) **SOFTWARE DEVELOPMENT PLATFORM AND OPERATING METHOD THEREOF**
SOFTWAREENTWICKLUNGSPLATTFORM UND BETRIEBSVERFAHREN DAFÜR
PLATEFORME DE DÉVELOPPEMENT DE LOGICIEL ET SON PROCÉDÉ DE FONCTIONNEMENT

(30) Priority: 30.05.2023 KR 20230069154
(43) Date of publication of application: 04.12.2024
(73) Proprietor: Samsung SDS Co., Ltd., Seoul 05510 (KR)
(72) Inventor: Hwang, Geung Min, 05510 SEOUL (KR); Yoon, Kyoung Hee, 05510 SEOUL (KR); Lee, Eun Suk, 05510 SEOUL (KR); Heo, Hye Mi, 05510 SEOUL (KR)
(74) Representative: Glawe, Delfs, Moll

(56) References cited:
- JP-A- 2019 049 855
- US-A1- 2004 001 092
- US-A1- 2016 092 176
- US-A1- 2022 004 407

## Description

### BACKGROUND

### Technical Field

The present disclosure relates to a software development platform and an operating method thereof.

### Description of the Related Art

A code automatic generation tool is widely used to improve development productivity of software. The code automatic generation tool is a program that automatically generates a code (i.e., source code) based on a predefined template or rule, and may automatically generate a code from description regarding a predefined interface, model, etc., for example.

The code automatic generation tool is mainly used to quickly generate a large amount of code that is tedious or time-consuming for a developer to write directly. For example, the code automatic generation tool is mainly used to generate repetitive common phrase codes or to generate codes for specific frameworks or platforms.

However, even though the above automatic code generation tool is used, it usually takes a considerable amount of time to complete development of desired software. This is because that a code portion of new software that can be generated by the automatic code generation tool is quite limited (e.g., code for a new function is difficult to automatically generate). In addition, for a user with little development experience, it is quite difficult to develop desired software even with the help of the code automatic generation tool. Documents US 2022/004407 A1, US 2016/092176 A1, JP 2019 049855 A, and US 2004/001092 A1 relate to the field of automatic code generation.

### BRIEF SUMMARY

An object of the present disclosure is to provide a software development platform capable of improving convenience and productivity of software development and an operating method thereof.

Another object of the present disclosure is to provide a software development platform capable of supporting high-quality software development and an operating method thereof.

The objects of the present disclosure are not limited to those mentioned above and additional objects of the present disclosure, which are not mentioned herein, will be clearly understood by those skilled in the art from the following description of the present disclosure.

At least one of the above-noted objects is solved by a software development platform according to claim 1 and an operating method of a software development platform according to claim 11. Preferable embodiments are described in the dependent claims. According to some embodiments of the present disclosure, a method (so-called a low-code method) of developing target software based on config setting for a common component (or a function to be added to the target software, etc.) may be supported. Accordingly, coding burden of a user may be minimized, and quality, development convenience and development productivity of software may be greatly improved. In addition, even a user with little development experience may quickly develop high-quality software.

In addition, a config setting function for target software may be provided through a graphical user interface (GUI)-based config interface. Accordingly, convenience of software development felt by a user may be further improved.

In addition, screen output processing may be performed based on a result of a comparison between a field structure acquired during execution of target software and an output data field list set in config information. For example, a data field existing in the field structure may be processed to be output onto a screen even though it is not set in the output data field list. In this case, since the user may quickly catch and correct a setting mistake for the output data field, quality of the target software may be further improved.

In addition, records (i.e., records that are not matched with a current DB record) requiring database (hereinafter, referred to as 'DB') update may be selected based on a status flag for each record, and the DB update may be performed in a way in which only the selected record is reflected in a DB's association table. Accordingly, synchronization between data of software, which is being executed, and DB data may be performed accurately and efficiently.

The effects according to the embodiment of the present disclosure are not limited to those mentioned above, and more various effects are included in the following description of the present disclosure.

According to an aspect of the present disclosure, there is provided a software development platform. The software development platform comprises a config manager receiving config information of target software through a graphical user interface (GUI)-based config interface - the config information including config information on a plurality of items, at least some of which are for configuring a common component- , a code generator generating a code of the target software based on the config information; and an execution engine executing the generated code by using the common component in which the config information of the at least some of the items is reflected.

In some embodiments, the config interface may include a wizard-based first config interface that provides a setting function for a predefined basic item among the plurality of items.

In some embodiments, the config interface may further include a second config interface that is not based on wizard, and the second config interface also provides the setting function for the basic item.

In some embodiments, the plurality of items may include items for setting a data field to be output onto a screen through a UI component at the time of execution of the target software, and the config manager may query a table associated with the target software in a linked database, and provide a column of the queried table as a candidate for the data field through the config interface.

In some embodiments, the plurality of items may include an item for setting a data field to be output onto a screen through a UI component at the time of execution of the target software, and the config manager, when there is a code associated with the target software, may extract a variable defined in the associated code and provide the extracted variable as a candidate of the data field.

In some embodiments, the code generator may provide the generated code through a code interface, and the execution engine may receive a user-defined code for the target software through the code interface, and executes the user-defined code and the generated code together.

In some embodiments, the config information may include a data field list set to be output to a screen through a UI component at the time of execution of the target software, and the execution engine may acquire a field structure associated with the UI component during execution of the generated code, output a first data field commonly existing in the field structure and the data field list to the screen through the UI component, and output a second data field, which exists in the field structure but does not exist in the data field list, to the screen through the UI component.

In some embodiments, the config information may include a data field list set to be output to a screen through a UI component at the time of execution of the target software, and the execution engine may acquire a field structure associated with the UI component during execution of the generated code, output a first data field commonly existing in the field structure and the data field list to the screen through the UI component, and output a second data field, which exists in the data field list but does not exist in the field structure, to the screen through the UI component.

In some embodiments, the config information may include information on a UI component set to be output to a screen at the time of execution of the target software and table information of a database associated with the UI component, and the execution engine may update a status flag value of some of a plurality of records output through the UI component during execution of the generated code, when an event for manipulating some of the plurality of records is monitored, select an update record among the plurality of records based on the status flag value when a preset database update condition is satisfied, and reflect a value of the update record in a table of the associated database.

In some embodiments, the execution engine may reset the status flag value of the update record after reflecting the value of the update record in the table.

In some embodiments, the status flag value of some of the records may be determined based on a type of the manipulation, and a type of an update operation for reflecting the value of the update record in the table may be determined based on the status flag value of the update record.

In some embodiments, the execution engine may determine whether the update record exists in the table when the status flag value of the update record indicates a deletion state, and reflect the value of the update record in the table based on the result of determination.

According to an aspect of the present disclosure, there is provided an operating method of a software development platform implemented by at least one computing device. The operation method may comprise providing a graphical user interface (GUI)-based config interface, receiving config information of target software through the config interface - the config information including config information on a plurality of items, at least some of which are for configuring a common component- , generating a code of the target software based on the config information, and executing the generated code by using the common component in which the config information of the at least some of the items is reflected.

In some embodiments, the config interface may include a wizard-based first config interface that provides a setting function for a predefined basic item among the plurality of items.

In some embodiments, the plurality of items may include items for setting a data field to be output onto a screen through a UI component at the time of execution of the target software, and the receiving config information may include querying a table associated with the target software in a linked database, and providing a column of the queried table as a candidate for the data field through the config interface.

In some embodiments, the generating a code of the target software may include providing the generated code through a code interface, and the executing the generated code may include receiving a user-defined code for the target software through the code interface, and executing the user-defined code and the generated code together.

In some embodiments, the config information may include a data field list set to be output to a screen through a UI component at the time of execution of the target software, and the executing the generated code may include acquiring a field structure associated with the UI component during execution of the generated code, outputting a first data field commonly existing in the field structure and the data field list to the screen through the UI component, and outputting a second data field, which exists in the field structure but does not exist in the data field list, to the screen through the UI component.

In some embodiments, the config information may include a data field list set to be output to a screen through a UI component at the time of execution of the target software, and the executing the generated code may include acquiring a field structure associated with the UI component during execution of the generated code, outputting a first data field commonly existing in the field structure and the data field list to the screen through the UI component, and outputting a second data field, which exists in the data field list but does not exist in the field structure, to the screen through the UI component.

In some embodiments, the config information may include information on a UI component set to be output to a screen at the time of execution of the target software and table information of a database associated with the UI component, and the executing the generated code may include monitoring an event for manipulating some of a plurality of records through the UI component during execution of the generated code, updating a status flag value of some of the records in response to the monitoring of the event, selecting an update record among the plurality of records based on the status flag value when a preset database update condition is satisfied, and reflecting a value of the update record in a table of the associated database.

According to an aspect of the present disclosure, there is provided a computer program coupled to a computing device. the computing program may be stored in a program readable by a computer to execute steps of providing a graphical user interface (GUI)-based config interface, receiving config information of target software through the config interface - the config information including config information on a plurality of items, at least some of which are for configuring a common component- , generating a code of the target software based on the config information, and executing the generated code by using the common component in which the config information of the at least some of the items is reflected.

### BRIEF DESCRIPTION OF THE DRAWINGS

The above and other aspects and features of the present disclosure will become more apparent by describing in detail exemplary embodiments thereof with reference to the attached drawings, in which:
FIG. 1 is an exemplary block diagram illustrating a software development platform according to some embodiments of the present disclosure;
FIG. 2 is an exemplary view illustrating a main config interface according to some embodiments of the present disclosure;
FIGS. 3 and 4 are exemplary views illustrating a wizard-based first config interface according to some embodiments of the present disclosure;
FIGS. 5 to 7 are exemplary views illustrating a second config interface according to some embodiments of the present disclosure;
FIG. 8 is an exemplary flow chart illustrating an operating method of a software development platform according to some embodiments of the present disclosure;
FIG. 9 is an exemplary flow chart illustrating a method of processing screen output of a software development platform according to some embodiments of the present disclosure;
FIG. 10 is an exemplary view for additionally describing a method of processing screen output of a software development platform according to some embodiments of the present disclosure;
FIG. 11 is an exemplary flow chart illustrating a method of updating a database of a software development platform according to some embodiments of the present disclosure;
FIG. 12 is an exemplary view for additionally describing a method of updating a database of a software development platform according to some embodiments of the present disclosure; and
FIG. 13 illustrates an exemplary computing device capable of implementing a software development platform according to some embodiments of the present disclosure.

### DETAILED DESCRIPTION OF THE DISCLOSURE

Hereinafter, preferred embodiments of the present disclosure will be described with reference to the attached drawings. The advantages and features of the present disclosure and methods of accomplishing the same may be understood more readily by reference to the following detailed description of preferred embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will only be defined by the appended claims.

In adding reference numerals to the components of each drawing, it should be noted that the same reference numerals are assigned to the same components as much as possible even though they are shown in different drawings. In addition, in describing the present disclosure, when it is determined that the detailed description of the related well-known configuration or function may obscure the gist of the present disclosure, the detailed description thereof will be omitted.

Unless otherwise defined, all terms used in the present specification (including technical and scientific terms) may be used in a sense that can be commonly understood by those skilled in the art. In addition, the terms defined in the commonly used dictionaries are not ideally or excessively interpreted unless they are specifically defined clearly. The terminology used herein is for the purpose of describing particular embodiments only and is not intended to be limiting of the disclosure. In this specification, the singular also includes the plural unless specifically stated otherwise in the phrase.

In addition, in describing the component of this disclosure, terms, such as first, second, A, B, (a), (b), can be used. These terms are only for distinguishing the components from other components, and the nature or order of the components is not limited by the terms. If a component is described as being "connected," "coupled" or "contacted" to another component, that component may be directly connected to or contacted with that other component, but it should be understood that another component also may be "connected," "coupled" or "contacted" between each component.

The terms "comprise", "include", "have", etc. when used in this specification, specify the presence of stated features, integers, steps, operations, elements, components, and/or combinations of them but do not preclude the presence or addition of one or more other features, integers, steps, operations, elements, components, and/or combinations thereof.

Hereinafter, some embodiments of the present disclosure will be described in detail with reference to the accompanying drawings.

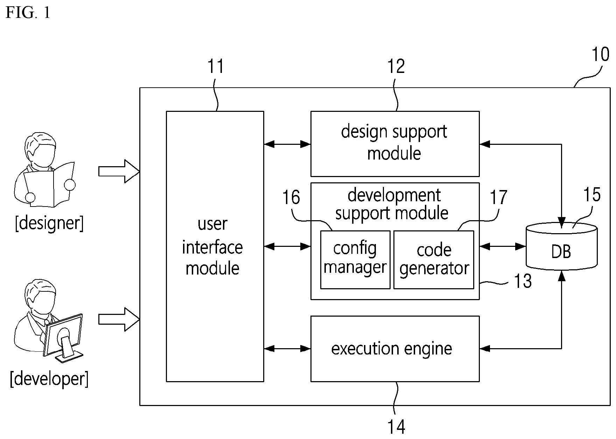

FIG. 1 is an exemplary block diagram illustrating a software development platform 10 according to some embodiments of the present disclosure.

As shown in FIG. 1, the software development platform 10 is a computing device/system capable of supporting (providing) a user-convenient software development function. For example, the software development platform 10 may support a method (so-called a low-code method) of developing target software through config (or configuration) setting for common components. Therefore, high-quality target software may be quickly developed. Alternatively, the software development platform 10 may support collaboration between users (e.g., designers, developers) participating in the development of the target software. Hereinafter, for convenience of description, the software development platform 10 will be abbreviated as a 'development platform 10'.

For reference, the development platform 10 may be referred to as a 'low code development platform', a 'program development platform', a 'software development device/system', etc. in some cases.

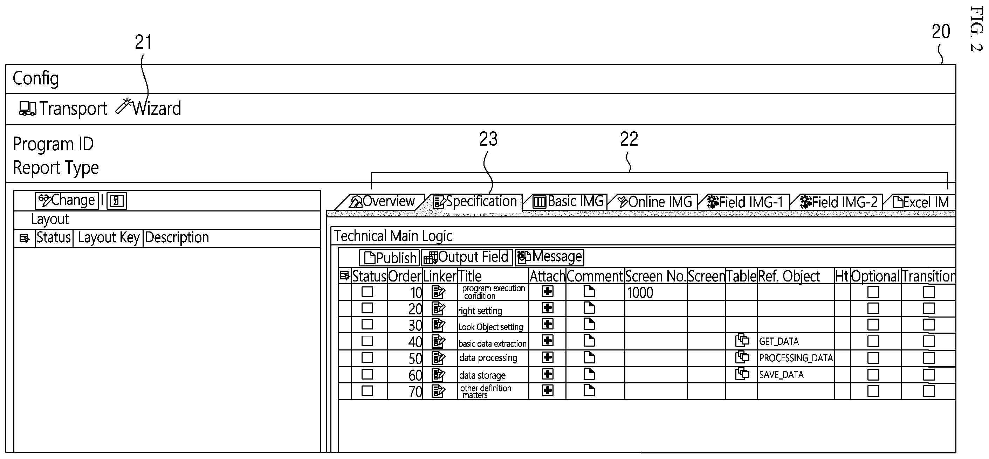

As shown, the development platform 10 may include a user interface module 11, a design support module 12, a development support module 13, an execution engine 14 and a database 15 (hereinafter, referred to as 'DB'). However, only components related to the embodiments of the present disclosure are shown in FIG. 2. Therefore, those skilled in the art to which the present disclosure pertains may understood that other general-purpose components (e.g. processor, memory, input/output interface, etc.) may be further included in the development platform 10 in addition to the components shown in FIG. 2. Also, the components of the development platform 10 shown in FIG. 2 represent functional elements that are functionally divided, and may be implemented in an integrated form in an actual physical environment or may be implemented in a form in which a specific functional element is separated into a plurality of sub-functional elements. Hereinafter, each component will be described in detail.

The user interface module 11 may refer to a module in charge of an interface between various users (designers, developers, etc.) related to software development and the development platform 10. For example, the user interface module 11 may provide a user with a portal interface for accessing the design support module 12 and the development support module 13. That is, the designer may access the design support module 12 through the user interface module 11, and the developer may access the development support module 13 through the user interface module 11. Such a portal interface may be implemented based on a web, or may not.

In some cases, the user interface module 11 may perform a user authentication (login) function in conjunction with an authentication module (not shown) or the like.

Next, the design support module 12 may refer to a module that provides various design convenience functions for target software. For example, the design support module 12 may provide a graphic user interface (GUI)-based design interface (or tool), a template of a design document and the like to a user (e.g., designer). The user may generate design information of the target software by defining/designing execution conditions of the target software, a related DB table and processing logic (e.g., table name, related CRUD, etc.), a logic of the target software (e.g., common function/logic corresponding to the common component, newly added individual function/logic, etc.), an execution screen, a message format, data lock and the like. The design support module 12 may convert the design information of the target software into a document having a predefined format and issue the converted document. The issued design document (or design information) may be stored in the DB 15 (e.g., stored to be matched with an identifier of the target software) and shared with other users (e.g., developers). For example, the developer may check the design document (or design information) of the target software through the development support module 13.

Next, the development support module 13 may refer to a module that provides various development convenience functions for the target software. For example, the development support module 13 may support most functions of the target software to be developed through config setting for the common components. As a result, a user's direct coding time may be minimized, and even a user with little development experience may easily develop desired software.

In this case, the common component is a component provided by the development platform 10 for convenience of software development, and may refer to, for example, a component in which a function/logic commonly used in various software is implemented. The common component may be a component implemented to be configurable through config (configuration) information. For example, a component (e.g., UI component) related to screen output may be implemented such that a data field to be output onto a screen and various attributes thereof (e.g., whether input/editing is possible, color, etc.) may be set through the config information.

As shown, the development support module 13 according to the embodiments may include a config manager 16 and a code generator 17.

The config manager 16 may refer to a module in charge of overall functions related to config. For example, the config manager 16 may receive config information on the target software from a user and provide the corresponding config information to the code generator 17. The input config information may be stored in the DB 15 (e.g., stored to be matched with the identifier of the target software).

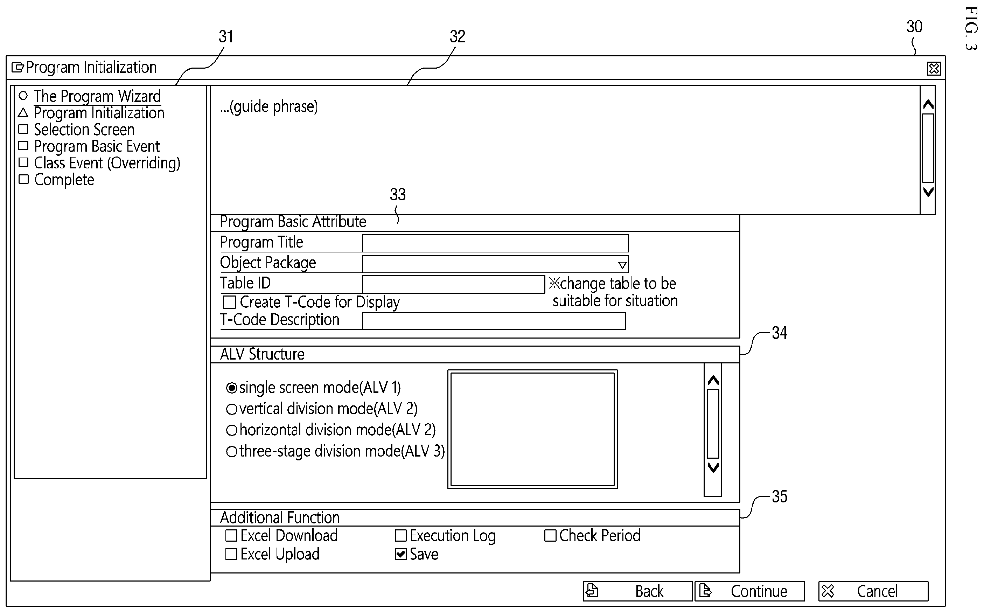

Items (i.e., config items) set by the config manager 16 may include, for example, screen layout, data field to be output onto a screen, an event and an event handler (e.g., handler in which a UI component related event and a processing logic thereof are defined), additional functions (see 34 of FIG. 3), logging method, data lock, execution condition (i.e., execution initiation condition), execution termination condition, execution right (e.g., user's execution right), interworking DB, DB table, etc., but are not limited thereto. At least some of the exemplified items may be understood as setting items related to the common component. For example, a function added to the target software relates to a common component in which the function is implemented, and the output data field may be also understood as a field output through a common UI component.

The config manager 16 may provide a graphical user interface (GUI)-based config interface to maximize user convenience. In other words, the config interface may support a user-convenient setting function for various items as exemplified above.

In some embodiments, the config manager 16 may provide a wizard-based first config interface for setup for a predefined basic item and a second config interface for detailed setup for various items. In this case, the wizard-based interface may mean, for example, an interface implemented to provide guide information for config or to support (guide) a setting function for basic items step by step or sequentially. A person skilled in the art may be already informed of the concept of the term 'wizard' and thus a detailed description thereof will be omitted. In order to provide more convenience of understanding, the present embodiments will be additionally described with reference to FIGS. 2 to 7.

FIG. 2 illustrates a main config interface 20 according to some embodiments of the present disclosure.

The main config interface 20 may provide a config setting function through a first config interface 30 (see FIG. 3) and a second config interface 22, for example. For example, as shown, a button object 21 for paging the first config interface 30 (see FIG. 3) may be disposed in one area of the main config interface 20, and a second config interface 22 may be disposed in the other area. In this case, the main config interface 20 may provide the first config interface 30 (see FIG. 3) in response to receiving an input for selecting (e.g., clicking) the button object 21, and the user may selectively use the first config interface 30 (see FIG. 3) and the second config interface 22, but the scope of the present disclosure is not limited thereto. The wizard-based first config interface 30 (see FIG. 3) may be automatically provided without a user input.

FIG. 2 illustrates a case that the second config interface 22 is implemented based on a tab page and a case that a specific tab page 23 is a page providing design information on target software. For example, the second config interface 22 may acquire design information (or document) of target software from the DB 15 by using an identifier (e.g., see 'TEST') of the target software and display the same on the corresponding tab page 23.

Meanwhile, in some embodiments, the config manager 16 may analyze the design information of the target software to perform automatic config setting or automatically set (recommend) an initial value of the config information. For example, the config manager 16 may derive a related item and an initial setting value through text analysis of the design information. Alternatively, the config manager 16 may determine software similar to the target software among previously developed software based on the design information (e.g., software having a large number of repeated common components (or data fields), software having similar functions, etc.), and may acquire config information of similar software from the DB 15 to use the acquired config information as the initial setting value. In this case, the user's development convenience may be further improved.

FIG. 3 illustrates a first config interface 30 according to some embodiments of the present disclosure.

As shown in FIG. 3, the first config interface 30 may provide a setting function for predefined basic (main) items (e.g., see 31) among a plurality of items, based on a wizard. For example, the first config interface 30 may provide a guide phrase (see 32) for each of the basic items (e.g., see 31) to the user, or may provide a sequential (or stepwise) setting function for the basic items (e.g., see 31). Therefore, development convenience of the user may be greatly improved, and even the user having little development experience may easily develop the target software.

FIG. 3 illustrates a case that a list of basic items and an indicator (e.g., see figures of triangle and square) indicating a config progress state are displayed in one area 31 of the first config interface 30 and a guide phrase for a basic item and detailed items are displayed in other areas (see 32 to 35), as an example. In addition, FIG. 3 illustrates a case that the basic item to be set is an item related to 'program (software) initialization' and the detailed items of the corresponding item include 'program (software) basic attributes (information) (see 33)', 'screen layout (see 34)' and 'additional function (see 35)' as an example, but the scope of the present disclosure is not limited thereto.

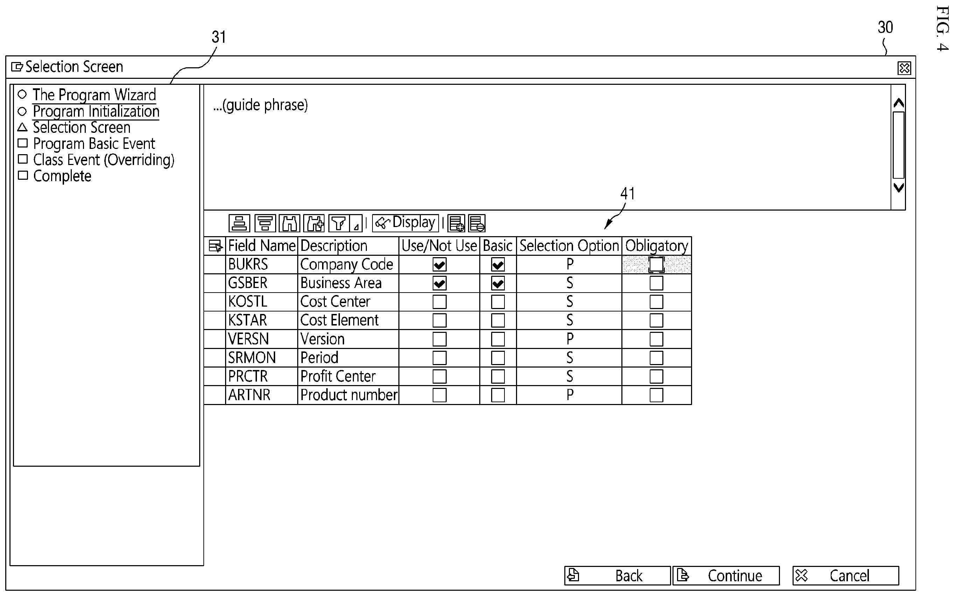

FIG. 4 illustrates a case that a basic item to be currently set is next item of the basic item exemplified in FIG. 3 (e.g., see change in a shape of the indicator) and the corresponding basic item is an item that sets data fields to be output onto a screen and their attributes (see 41).

As shown in FIG. 4, the user may implement (develop) a type of a data field output onto a screen, an output form thereof and the like even without complicated coding through setting tasks such as selecting a data field (i.e., a data field to be output onto a screen through the UI component among the common components) to be output onto the screen among a plurality of candidate data fields (see 41) displayed on the first config interface 30 or inputting (or selecting) an attribute value. Of course, the user may define a new output data field through the first config interface 30.

Meanwhile, a detailed method of determining a candidate data field provided (displayed) through the first config interface 30 or the second config interface 22 may vary depending on the embodiments.

In some embodiments, the config manager 16 may query a table (e.g., a table set in a DB-related item) associated with the target software in a linked DB (e.g., a DB set in the DB-related item) and provide a column of the queried table to the candidate data field.

In some other embodiments, the config manager 16 may determine whether there is a code associated with the target software. When there is an associated code, the config manager 16 may extract a variable defined (declared) in the corresponding code and provide it to the candidate data field. In this case, the associated code may be, for example, a code automatically generated by the code generator 17, a code directly written by the user and the like, but is not limited thereto.

In some other embodiments, candidate data fields may be provided (displayed) based on combination of the various examples described above.

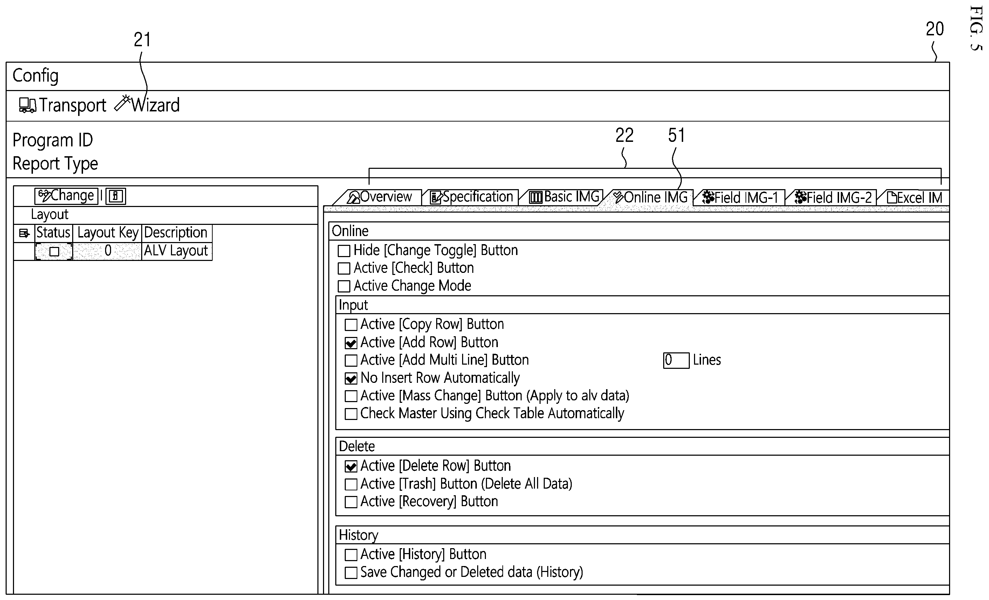

Hereinafter, the second config interface 22 according to some embodiments of the present disclosure will be additionally described with reference to FIGS. 5 to 7.

As shown in FIGS. 5 to 7, the second config interface 22 may be an interface that provides a detailed setting function for various items. In this case, the various items may include basic items that may be set through the first config interface 30, for example. That is, a skilled user may understand that config may be implemented to be set through only the second config interface 22 without receiving assistance from the first config interface 30.

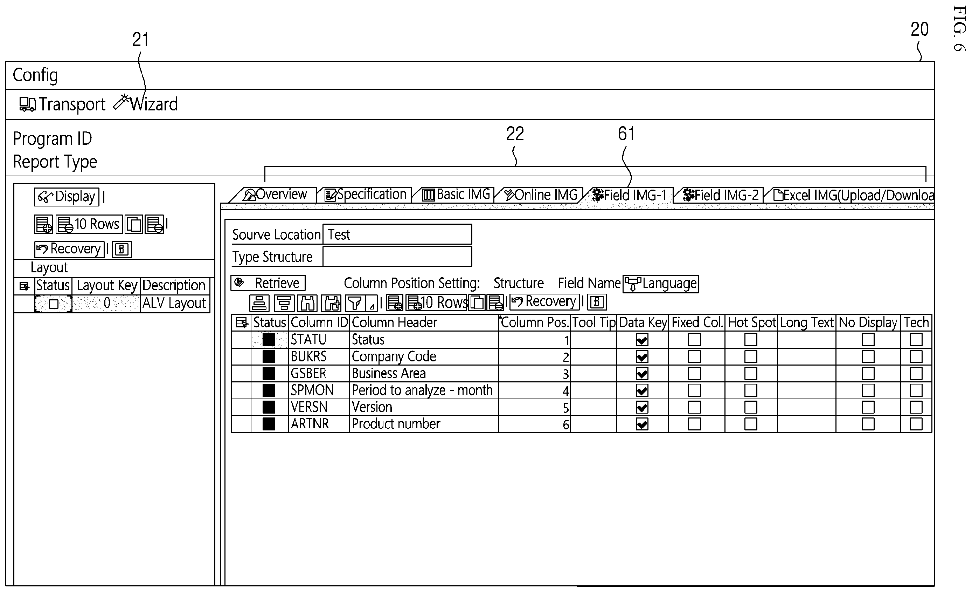

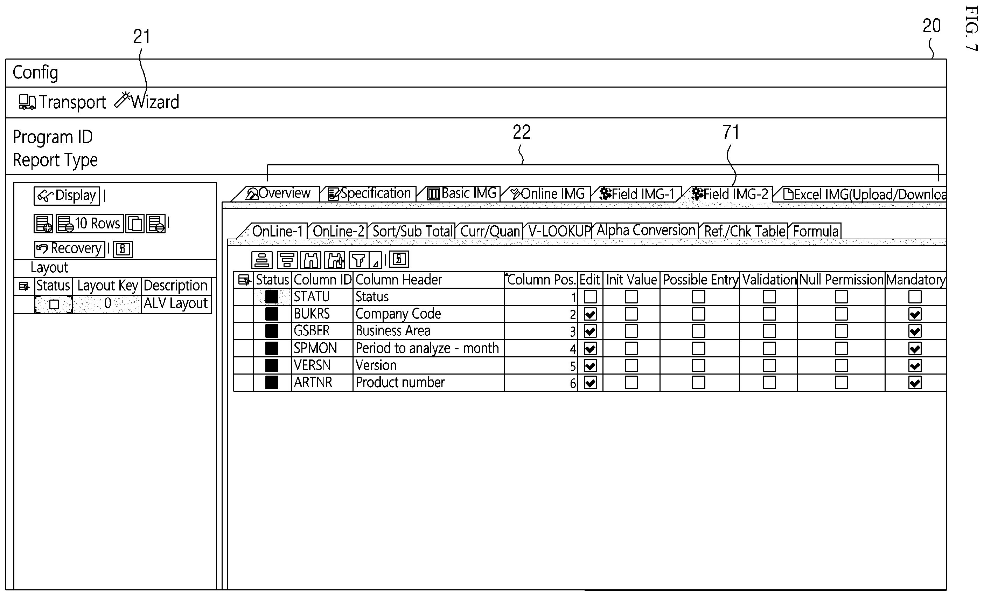

FIG. 5 illustrates an interface (i.e., tap page 51) that sets various functions (e.g., activation and deactivation) related to the UI component (or target software). In addition, FIG. 6 illustrates an interface (i.e., tap page 61) that sets a data field to be output onto a screen and basic attributes thereof, and FIG. 7 illustrates an interface (i.e., tap page 71) that sets additional attributes of an output data field.

The description will be given with reference to FIG. 1 again.

The code generator 17 may refer to a module that automatically generates a code of the target software based on the config information set through the config manager 16. For example, the code generator 17 may automatically generate a code of the target software by defining output data fields set in the config information or inserting a code for paging set common components, but the scope of the present disclosure is not limited thereto. The method of generating a code by the code generator 17 may be any method.

The code generator 17 may provide a generation code of the target software through a code interface (e.g., code window). In this case, an interface (e.g., button object, etc.) for the user to request execution (e.g., compile, build, execute, etc.) of the corresponding code may exist in the code interface. The user may develop target software by inputting a user-defined code (e.g., code for individual functions/logics that do not exist in the common component) through the code interface.

Next, the execution engine 14 may refer to a module that executes the code of the target software. For example, the execution engine 14 may execute an auto-generated code and/or the user-defined code of the target software (e.g., the auto-generated code and the user-defined code are executed together). In this case, the execution engine 14 may execute the code of the target software by using a common component in which the configuration (config) information is reflected.

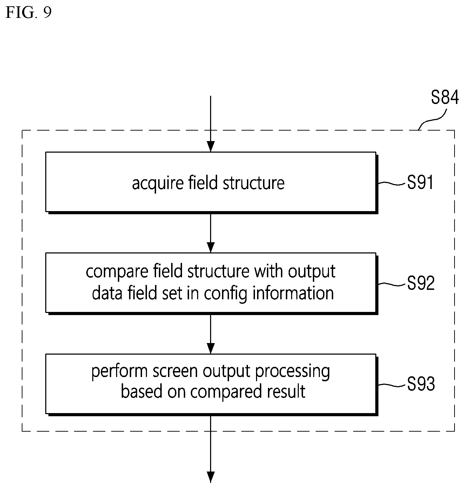

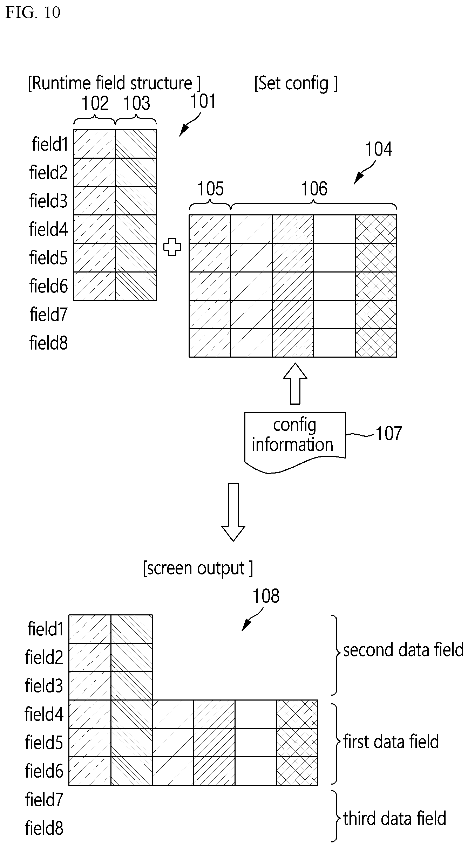

Meanwhile, there may be a case that the field structure acquired during execution of the target software and the output data field set in the config information are not matched with each other. In this case, the execution engine 14 may perform appropriate screen output processing based on a comparison result between the field structure and the output data field, which will be described in detail with reference to FIGS. 9 and 10.

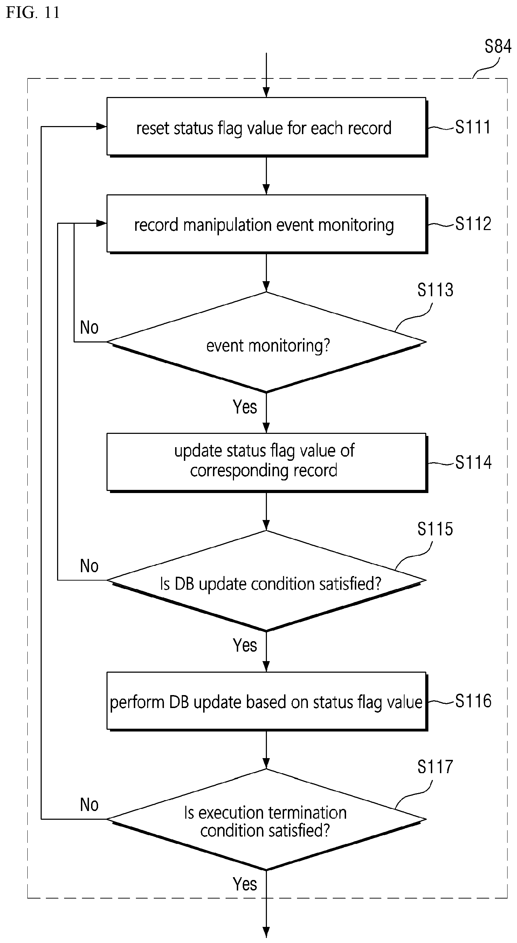

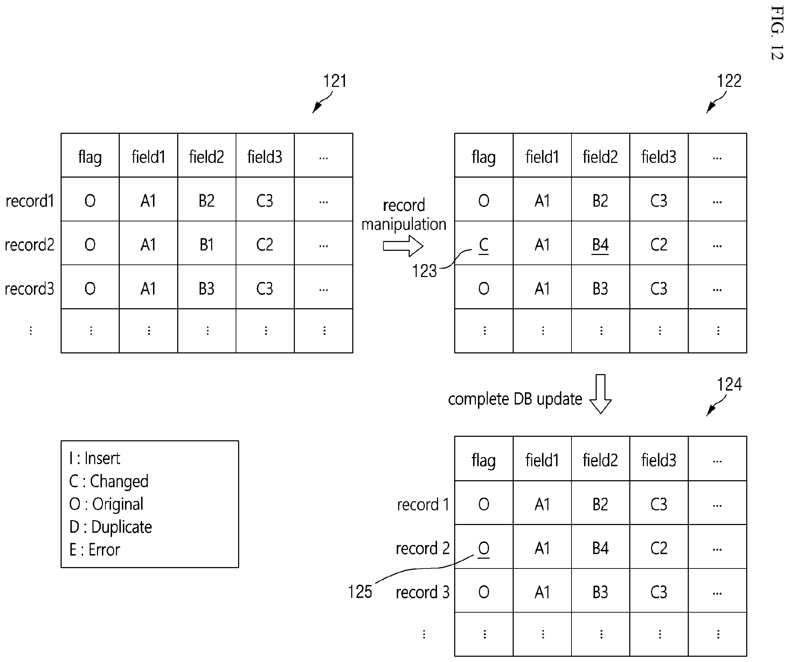

In addition, in some embodiments, the execution engine 14 may also perform efficient DB update processing based on a record-specific status flag, which will be described in detail with reference to FIGS. 11 and 12.

Next, the DB 15 may refer to a storage that stores and manages various kinds of data/information related to the development platform 10. For example, the DB 15 may store and manage software design information, code, and software-related data (e.g., various business data related to a business process). The DB 15 may collectively refer to various storages that provide a data/information sharing function among users (e.g., designers, developers, etc.).

Synchronization-related processing (i.e., DB update processing) between data changed by execution of the target software and data stored in the table of the DB 15 will be understood with reference to the description of FIGS. 11 and 12.

The above-described development platform 10 may be implemented by at least one computing device. For example, all functions of the development platform 10 may be implemented in a single computing device, and a first function of the development platform 10 may be implemented in a first computing device, and a second function thereof may be implemented in a second computing device. Alternatively, a specific function of the development platform 10 may be implemented in a plurality of computing devices.

As a more detailed example, all functions of the development platform 10 may be implemented in a server device, the first function of the development platform 10 may be implemented in a server device and the second function thereof may be implemented in a client device (e.g., a device used by a user). Alternatively, a specific function of the development platform 10 may be divisionally implemented in a server device and a client device.

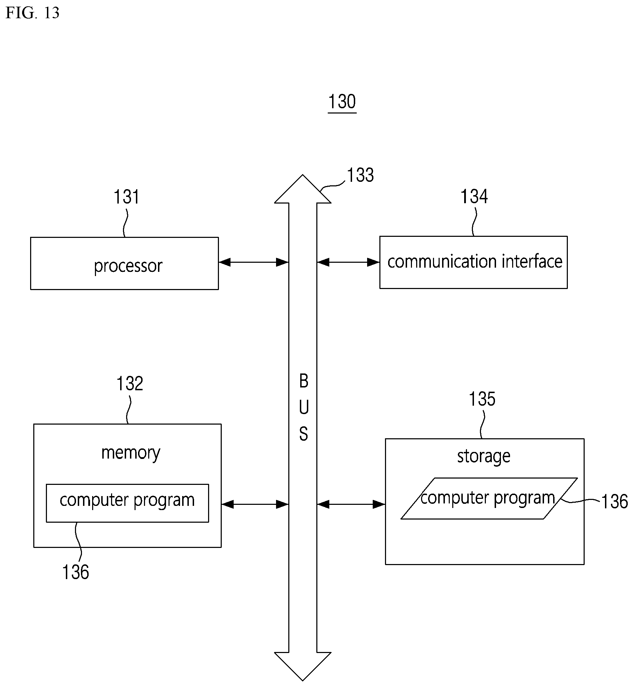

The computing device may include any device having a computing function, and an example of such a device will be described with reference to FIG. 13. Since a computing device is an assembly in which various components (e.g. memory, processor, etc.) interact, it may be referred to as a 'computing system' in some cases. Of course, the term 'computing system' may also encompass the concept of an assembly in which a plurality of computing devices interact.

The configuration and the operation of the development platform 10 according to some embodiments of the present disclosure have been described with reference to FIGS. 1 to 7. As described above, a method (so-called a low code method) of developing target software based on config for a common component (or a function to be added to the target software) may be supported. Therefore, coding burden of the user may be minimized, and quality, development convenience and development productivity of the software may be greatly improved. In addition, even a user with little development experience may quickly develop high-quality software (because the common component is a verified component and writing of the user-defined code is minimized).

In addition, the config setting function for the target software may be provided through the GUI-based config interface. Therefore, convenience of software development felt by the user may be further improved.

Hereinafter, in order to provide more convenience for understanding, an operating method of the development platform 10 will be described in more detail.

Hereinafter, in order to provide convenience of understanding, the description will be continued on the assumption that all steps/operations of the method to be described later are performed in the above-described development platform 10. Therefore, when a subject of a specific step/operation is omitted, it may be understood that the specific step/operation is performed in the development platform 10. However, in a real environment, some steps/operations of the method to be described later may be performed in other computing devices.

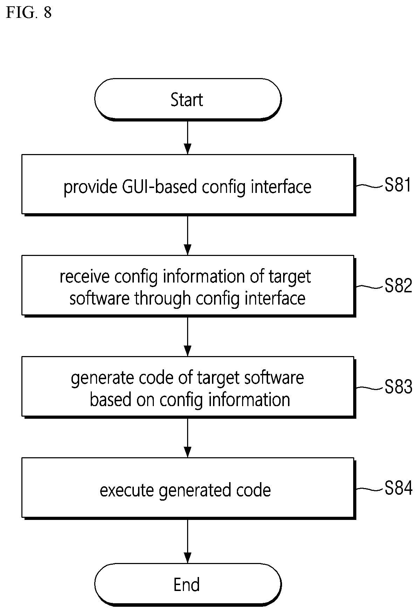

FIG. 8 is an exemplary flow chart schematically illustrating an operating method of the development platform 10 according to some embodiments of the present disclosure. However, this is only a preferred embodiment for achieving the object of the present disclosure, and some steps may be added or deleted as needed. FIG. 8 may be understood as illustrating, for example, a process in which a user (e.g., a developer) develops target software through the development platform 10.

As shown in FIG. 8, the operating method according to the embodiments may be initiated in step S81 of providing a GUI-based config interface. For example, the development platform 10 may provide a config interface in response to a user's request. This step will be understood with further reference to the config manager 16 and the descriptions of FIGS. 2 to 7.

In step S82, config information of the target software may be input through the config interface. For example, the development platform 10 may receive configuration (config) information on a plurality of predefined items from a user through the config interface (e.g. the first config interface 30 and the second config interface 22). In this case, at least some of the plurality of items may be items for configuring the common component to be suitable for the target software. This step will be also understood with further reference to the config manager 16 and the descriptions of FIGS. 2 to 7.

In step S83, the code of the target software may be generated based on the config information. For example, the development platform 10 may automatically generate the code of the target software by inserting a code for paging the common component set in the config information. This step will be understood with further reference to the description of the code generator 17.

In some cases, the user may enter the user-defined code through the code interface (e.g., the user-defined code is added to the auto-generated code).

In step S84, the generated code may be executed. For example, the development platform 10 may execute the generated code by using the common component in which the configuration (config) information is reflected. This step will be understood with further reference to the description of the execution engine 14.

For reference, the user may check whether the target software has been correctly developed by comparing the execution result with the design information of the target software. As a result of the comparison, when the execution result and the design information are not matched with each other, the user may complete the development of the target software by correcting the config information or correcting the user-defined code.

The above-described steps S81 and S82 may be performed by the config manager 16, the step S83 may be performed by the code generator 17, and the step S84 may be performed by the execution engine 14.

Hereinafter, various embodiments related to the step S84 of code execution will be described with reference to FIGS. 9 to 12.

First, the method of processing the screen output of the development platform 10 according to some embodiments of the present disclosure will be described with reference to FIGS. 9 and 10.

The method of processing the screen output, which will be described later, relates to the method of processing the screen output when the field structure, which is internal (dynamic) data acquired during execution of the target software, and the output data field set in the config information are not matched with each other.

FIG. 9 is an exemplary flow chart illustrating a method of processing screen output of the development platform 10 according to some embodiments of the present disclosure.

As shown in FIG. 9, in step S91, it is assumed that a field structure is acquired. In other words, it is assumed that a field structure (e.g., a field structure that is transferred to a UI component and will be output to a screen) is dynamically acquired while the development platform 10 is executing the target software. In this case, the field structure may refer to a structure (or structure data) composed of one or more data fields, and the field structure may refer to at least one record composed of one or more data fields.

In step S92, the field structure and the output data field (hereinafter, abbreviated as 'output field') set in the config information are compared with each other. The development platform 10 compares the field structure (i.e., the field list of the structure) with the output field list configured in the config information.

In step S93, screen output processing is performed based on the compared result. In detail, the development platform 10 outputs a first data field (e.g., see fields 4 to 6 of FIG. 10), which commonly exists in the field structure and the output field list, to the screen through the UI component, and also outputs a second data field (e.g., see fields 1 to 3 of FIG. 10), which exists only in the field structure, to the screen. The reason why the second data field is output to the screen is that the second data field is highly likely to be a data field missing from the output field setting due to the carelessness of the user. However, the development platform 10 may process a third data field (e.g., see fields 7 and 8 of FIG. 10) existing only in the output field list so as not to be output to the screen. This is because that the third data field is highly likely to be a data field that is incorrectly set due to the carelessness of the user.

In order to provide more convenience of understanding, an additional description will be given with reference to FIG. 10.

As shown in FIG. 10, it is assumed that the development platform 10 acquires a field structure 101 composed of 'field 1' to 'field 6' during execution (i.e., runtime) of the target software. In addition, it is assumed that output fields 104 set in the config information 107 are composed of 'field 4' to 'field 8'. In FIG. 10, a rectangular figure may mean attribute values of a data field, first attributes 102 and 105 may mean identifiers of respective data fields, and a second attribute 103 may mean a value allocated to each data field. The other attributes 106 may mean, for example, attributes (e.g., color, whether editing is possible, etc.) defined in the config information 107.

In the above case, the development platform 10 outputs first data fields (e.g., fields 4 to 6) common between the field structure 101 and the output fields 104 (i.e., output field list) to the screen (see 108).

In addition, the development platform 10 also outputs second data fields (e.g., fields 1 to 3), which exist in the field structure 101 but do not exist in the output fields 104 (i.e., the output field list), to the screen (see 108). As mentioned above, the second data fields (e.g., fields 1 to 3) are likely to be data fields missing from the setting due to the carelessness of the user.

In addition, the development platform 10 may process the third data fields (e.g., field 7 and field 8) that do not exist in the field structure 101 but exist in the output fields 104 (i.e., the output field list), so as not to be output to the screen (see 108). This is because that the third data fields (e.g., field 7 and field 8) are highly likely to be incorrectly set data fields due to the carelessness of the user. However, in some cases, the development platform 10 may notify the user of information on the third data fields (e.g., field 7 and field 8).

The method of processing the screen output of the development platform 10 according to some embodiments of the present disclosure has been described with reference to FIGS. 9 and 10. As described above, the screen output processing may be performed based on the result of comparison between the field structure acquired during execution of the target software and the output field list set in the configuration information. For example, the data field existing in the field structure may be processed to be output to the screen even though it is not set in the output field list. In this case, since the user may quickly catch and correct a setting mistake for the output field, quality of the target software may be improved.

Hereinafter, a DB update method of the development platform 10 according to some embodiments of the present disclosure will be described with reference to FIGS. 11 and 12.

The DB update method described below relates to a method for more efficiently performing DB update by the development platform 10 when records are manipulated (e.g., inserted, deleted, corrected, etc.) during execution of the target software. In this case, the above-described embodiments, it should not be understood that the separation of various manipulation on the record may include manipulation (e.g., field addition, field correction, field deletion, etc.) with respect to fields of data.

FIG. 11 is an exemplary flow chart illustrating a DB update method of the development platform 10 according to some embodiments of the present disclosure.

As shown in FIG. 11, the DB update method according to the embodiments may be started in step S111 of resetting (initializing) a status flag value for each record. In this case, the status flag may be a value indicating a manipulation state of a corresponding record, and the value may be defined in various ways. For example, the development platform 10 may reset (initialize) a status flag value of each record to a value indicating an original state.

In step S112, a record manipulation event may be monitored. For example, the development platform 10 may monitor whether manipulation such as insertion, deletion or correction of the record (e.g., record output to the screen through the UI component) occurs by the user.

In steps S113 and S114, in response to the monitoring of the record manipulation event, the status flag value of the corresponding record may be updated. For example, the development platform 10 may update the status flag value of the manipulated record to a value indicating a type of manipulation (e.g., insertion, deletion, correction, etc.). In this case, the status flag values may be all defined differently for each type of manipulation or some of them may be defined to have the same value.

In step S115, it may be determined whether a preset DB update condition is satisfied. The DB update condition may be set, for example, like the case that a user or the like requests a DB update (e.g., DB storage), the target software is terminated or a predetermined time or more has elapsed from a previous DB update timing point, but the scope of the present disclosure is not limited thereto.

In step S116, the DB update may be performed based on the status flag value. For example, the development platform 10 may perform the DB update by selecting an update record (e.g., an manipulated record) from a plurality of records based on the status flag value and reflecting a value of the update record in a table (e.g., a table set in the config information) of an associated database. In this case, a type of a DB update operation for reflecting the value of the update record in the corresponding table may be determined based on the status flag value of the corresponding update record (e.g., an insertion operation is performed for the record of an insertion state and an update operation is performed for the record of a correction state).

Meanwhile, when the status flag value of the update record indicates a deletion state, the development platform 10 may determine whether the corresponding update record exists in the associated table. In addition, the development platform 10 may reflect the value of the update record in the corresponding table based on the determination result. In other words, the development platform 10 may perform a DB update for reflecting the deletion state only when the corresponding update record exists in the associated table (because DB update is unnecessary for records added and deleted after the previous DB update timing point).

In step S117, it may be determined whether an execution termination condition of the target software is satisfied. When the execution termination condition is not satisfied, the development platform 10 may reset the status flag values of the records (because it is synchronized with the DB through the DB update step S116), and may re-enter the record manipulation monitoring step S112.

In order to provide more convenience of understanding, an additional description will be given with reference to FIG. 12.

As shown in FIG. 12, it is assumed that the development platform 10 resets a status flag value of each of a plurality of records (e.g., 'Record 1' to 'Record 3') (see 'O' of 121) and outputs the plurality of records (e.g., 'Record 1' to 'Record 3') to the screen through the UI component while executing the target software. In addition, it is assumed that the user has manipulated the value of 'Record 2' (e.g., changed the value of 'Field 2') (i.e., a record manipulation event occurs and is monitored).

In the above case, the development platform 10 may update the value of the status flag of 'Record 2' to a value (e.g., 'C') indicating the correction state (see 122 and 123).

Next, it is assumed that a DB update is performed as a preset DB update condition is satisfied. For example, it is assumed that the development platform 10 selects only 'Record 2' as the update record and reflects the value of the update record in the association table of the DB.

In the above case, the development platform 10 may reset the value of the status flag of the update record (e.g., 'Record 2') (see 124 and 125).

The DB update method of the development platform 10 according to some embodiments of the present disclosure has been described with reference to FIGS. 11 and 12. As described above, records (i.e., records that are not matched with the current DB record) requiring DB update may be selected based on the status flag for each record, and the DB update may be performed in a way that only the selected record is reflected in the table of the associated DB. Therefore, synchronization between data of the target software, which is being executed, and DB data may be accurately and efficiently performed. That is, the DB update (synchronization) may be performed considerably efficiently by selecting the update record using the status flag and performing delayed DB update rather than immediate DB update (because the number of records to be updated and the number of DB updates are reduced).

Hereinafter, an exemplary computing device 130 capable of implementing the development platform 10 according to some embodiments of the present disclosure will be described with reference to FIG. 13.

FIG. 13 is a hardware configuration diagram of an exemplary computing device 130.

Referring to FIG. 13, the computing device 130 may include one or more processors 131, a bus 133, a communication interface 134, a memory 132, which loads a computer program 136 executed by the processors 131, and a storage 135 for storing the computer program 136.

The processor 131 controls overall operations of each component of computing device 100. The processor 131 may be configured to include at least one of a Central Processing Unit (CPU), a Micro Processor Unit (MPU), a Micro Controller Unit (MCU), a Graphics Processing Unit (GPU), or any type of processor well known in the art. Further, the processor 101 may perform calculations on at least one application or program for executing a method/operation according to various embodiments of the present disclosure. The computing device 130 may have one or more processors.

The memory 132 stores various data, instructions and/or information. The memory 132 may load one or more programs 136 from the storage 135 to execute methods/operations according to various embodiments of the present disclosure. An example of the memory 132 may be a RAM, but is not limited thereto.

The bus 133 provides communication between components of computing device 130. The bus 133 may be implemented as various types of bus such as an address bus, a data bus and a control bus.

The communication interface 134 supports wired and wireless internet communication of the computing device 130. The communication interface 134 may support various communication methods other than internet communication. To this end, the communication interface 134 may be configured to comprise a communication module well known in the art of the present disclosure.

The storage 135 can non-temporarily store one or more computer programs 136. The storage 135 may be configured to comprise a non-volatile memory, such as a Read Only Memory (ROM), an Erasable Programmable ROM (EPROM), an Electrically Erasable Programmable ROM (EEPROM), a flash memory, a hard disk, a removable disk, or any type of computer readable recording medium well known in the art.

For example, a computer program 136 may include instructions performed to an operation of providing a GUI-based config interface, an operation of receiving config information of target software including config information on a common component through the config interface, an operation of generating a code of the target software based on the config information and an operation of executing the generated code by using the common component in which the config information is reflected.

As another example, the computer program 136 may include instructions for performing at least some of the steps/operations described with reference to FIGS. 1 to 12.

In case of the above examples, the development platform 10 according to some embodiments of the present disclosure may be implemented through the computing device 130.

Meanwhile, in some embodiments, the computing device 130 shown in FIG. 13 may mean a virtual machine implemented based on the cloud technology. For example, the computing device 130 may be a virtual machine operating on one or more physical servers included in a server farm. In this case, at least some of a processor 131, a memory 132 and a storage 135, which are shown in FIG. 13, may be virtual hardware, and the communication interface 134 may be also implemented with a virtualized networking element such as a virtual switch.

The technical features of the present disclosure described so far may be embodied as computer readable codes on a computer readable medium. The computer readable medium may be, for example, a removable recording medium (CD, DVD, Blu-ray disc, USB storage device, removable hard disk) or a fixed recording medium (ROM, RAM, computer equipped hard disk). The computer program recorded on the computer readable medium may be transmitted to other computing device via a network such as internet and installed in the other computing device, thereby being used in the other computing device.

Although operations are shown in a specific order in the drawings, it should not be understood that desired results can be obtained when the operations must be performed in the specific order or sequential order or when all of the operations must be performed. In certain situations, multitasking and parallel processing may be advantageous. According to the configurations is necessarily required, and it should be understood that the described program components and systems may generally be integrated together into a single software product or be packaged into multiple software products.

## Claims

1. A software development platform (10) comprising:
a config manager (16) configured to receive config information (107) of target software through a graphical user interface, GUI, -based config interface (20) - the config information (107) including config information on a plurality of items, at least some of which are for configuring a common component- ;
a code generator (17) configured to generate a code of the target software based on the config information (107); and
an execution engine (14) configured to execute the generated code by using the common component in which the config information of the at least some of the items is reflected,
**characterized in that**:
wherein the plurality of items include items for setting a data field to be output onto a screen through a UI component at the time of execution of the target software, wherein the config information (107) further includes a data field list (104), and
the execution engine (14) is configured to
acquire a field structure transferred to the UI component during execution of the target software,
compare the data field list (104) set in the config information and the acquired field structure, and
determine at least one data field output to the screen through the UI component based on a result of the comparison,
wherein the at least one data field comprises:
a first data field commonly existing in the field structure and the data field list and
a second data field, wherein the second data field is a data field which exists in the field structure but does not exist in the data field list, or the second data field is a data field which exists in the data field list but does not exist in the field structure.

2. The software development platform (10) of claim 1, wherein the config interface (20) includes a wizard-based first config interface (30) that provides a setting function for a predefined basic item among the plurality of items.

3. The software development platform (10) of claim 2, wherein the config interface (20) further includes a second config interface (22) that is not based on wizard, and
the second config interface (22) also provides the setting function for the basic item.

4. The software development platform (10) of claim 1, wherein the config manager (16) is configured to query a table associated with the target software in a linked database, and to provide a column of the queried table as a candidate for the data field through the config interface (20).

5. The software development platform (10) of claim 1, wherein the config manager (16), when there is a code associated with the target software, is configured to extract a variable defined in the associated code and to provide the extracted variable as a candidate of the data field.

6. The software development platform (10) of claim 1, wherein the code generator (17) is configured to provide the generated code through a code interface, and
the execution engine (14) is configured to receive a user-defined code for the target software through the code interface, and to execute the user-defined code and the generated code together.

7. The software development platform of claim 1, wherein the config information further includes information on a UI component set to be output to a screen at the time of execution of the target software and table information of a database associated with the UI component, and
the execution engine is configured to update a status flag value of some of a plurality of records output through the UI component during execution of the generated code, when an event for manipulating some of the plurality of records is monitored, to select an update record among the plurality of records based on the status flag value when a preset database update condition is satisfied, and to reflect a value of the update record in a table of the associated database.

8. The software development platform (10) of claim 7, wherein the execution engine (14) is configured to reset the status flag value of the update record after reflecting the value of the update record in the table.

9. The software development platform (10) of claim 7, wherein the status flag value of some of the records is determined based on a type of the manipulation, and a type of an update operation for reflecting the value of the update record in the table is determined based on the status flag value of the update record.

10. The software development platform (10) of claim 9, wherein the execution engine (14) is configured to determine whether the update record exists in the table when the status flag value of the update record indicates a deletion state, and to reflect the value of the update record in the table based on the result of determination.

11. An operating method of a software development platform (10) implemented by at least one computing device, the operating method comprising:
providing a graphical user interface, GUI, -based config interface (20);
receiving config information (107) of target software through the config interface (20) - the config information (107) including config information on a plurality of items, at least some of which are for configuring a common component- ;
generating a code of the target software based on the config information (107); and
executing the generated code by using the common component in which the config information of the at least some of the items is reflected,
**characterized in that**:
wherein the plurality of items include items for setting a data field to be output onto a screen through a UI component at the time of execution of the target software, wherein the config information (107) further includes a data field list (104), and
wherein the executing the generated code includes:
acquiring a field structure transferred to the UI component during execution of the target software,
comparing the data field list (104) set in the config information and the acquired field structure, and
determining at least one data field output to the screen through the UI component based on a result of the comparison,
wherein the at least one data field comprises:
a first data field commonly existing in the field structure and the data field list and
a second data field, wherein the second data field is a data field which exists in the field structure but does not exist in the data field list, or the second data field is a data field which exists in the data field list but does not exist in the field structure.

12. The operating method of claim 11 wherein the config information (107) further includes information on a UI component set to be output to a screen at the time of execution of the target software and table information of a database associated with the UI component, and
the executing the generated code includes:
monitoring an event for manipulating some of a plurality of records through the UI component during execution of the generated code;
updating a status flag value of some of the records in response to the monitoring of the event;
selecting an update record among the plurality of records based on the status flag value when a preset database update condition is satisfied; and
reflecting a value of the update record in a table of the associated database.

## Patentansprüche

1. Softwareentwicklungsplattform (10), umfassend:
einen Konfigurationsmanager (16), der konfiguriert ist zum Empfangen von Konfigurationsinformationen (107) einer Zielsoftware durch eine auf einer grafischen Benutzeroberfläche, GUI, basierten Konfigurationsschnittstelle (20), wobei die Konfigurationsinformationen (107 die Konfigurationsinformationen über eine Vielzahl von Elementen beinhalten, von denen mindestens ein Teil zum Konfigurieren einer gemeinsamen Komponente geeignet sind;
einen Codegenerator (17), der konfiguriert ist zum Erzeugen eines Codes der Zielsoftware basierend auf den Konfigurationsinformationen (107); und
eine Ausführungsengine (14), die konfiguriert ist zum Ausführen des erzeugten Codes, indem die gemeinsame Komponente verwendet wird, in der die Konfigurationsinformationen der mindestens einigen der Elemente wiedergegeben werden,
**dadurch gekennzeichnet, dass**:
die Vielzahl von Elementen Elemente zum Einstellen eines Datenfelds beinhaltet, das zur Ausführungszeit der Zielsoftware auf einem Bildschirm durch eine UI-Komponente auf einem Bildschirm ausgegeben wird, wobei die Konfigurationsinformationen (107) ferner eine Datenfeldliste (104) beinhalten, und
die Ausführungsengine (14) konfiguriert ist zum:
Erfassen einer Feldstruktur, die während der Ausführungszeit der Zielsoftware zu der UI-Komponente übertragen wird,
Vergleichen der Datenfeldliste (104), die in den Konfigurationsinformationen enthalten ist, mit der erfassten Feldstruktur, und
Ermitteln, basierend auf einem Ergebnis des Vergleichs, mindestens eines Datenfelds, das durch die UI auf dem Bildschirm ausgegeben wird,
wobei das mindestens eine Datenfeld umfasst:
ein erstes Datenfeld, das sowohl in der Feldstruktur als auch in der Datenfeldliste vorhanden ist, und
ein zweites Datenfeld, wobei das zweite Datenfeld ein Datenfeld ist, das in der Feldstruktur vorhanden ist, aber nicht in der Datenfeldliste vorhanden ist, oder wobei das zweite Datenfeld ein Datenfeld ist, das in der Datenfeldliste vorhanden ist, aber nicht in der Feldstruktur vorhanden ist.

2. Softwareentwicklungsplattform (10) nach Anspruch 1, wobei die Konfigurationsschnittstelle (20) eine assistentenbasierte erste Konfigurationsschnittstelle (30) beinhaltet, die eine Einstellfunktion für ein vordefiniertes Basiselement aus der Vielzahl von Elementen bereitstellt.

3. Softwareentwicklungsplattform (10) nach Anspruch 2, wobei die Konfigurationsschnittstelle (20) ferner eine zweite Konfigurationsschnittstelle (22) beinhaltet, die nicht auf einem Assistenten basiert ist, und
wobei die zweite Konfigurationsschnittstelle (22) auch die Einstellfunktion für das Basiselement bereitstellt.

4. Softwareentwicklungsplattform (10) nach Anspruch 1, wobei der Konfigurationsmanager (16) konfiguriert ist zum Abfragen einer Tabelle, die in einer verknüpften Datenbank mit der Zielsoftware assoziiert ist, und zum Bereitstellen, durch die Konfigurationsschnittstelle (20), einer Spalte der abgefragten Tabelle als ein Kandidat für das Datenfeld.

5. Softwareentwicklungsplattform (10) nach Anspruch 1, wobei, wenn ein Code vorhanden ist, der mit der Zielsoftware assoziiert ist, der Konfigurationsmanager (16) konfiguriert ist zum Extrahieren einer Variablen, die in dem assoziierten Code definiert ist, und zum Bereitstellen der extrahierten Variablen als einen Kandidaten für das Datenfeld.

6. Softwareentwicklungsplattform (10) nach Anspruch 1, wobei der Codegenerator (17) konfiguriert ist zum Bereitstellen des erzeugten Codes durch eine Codeschnittstelle, und
wobei die Ausführungsengine (14) konfiguriert ist zum Empfangen eines benutzerdefinierten Codes für die Zielsoftware durch die Codeschnittstelle und zum gemeinsamen Ausführen des benutzerdefinierten Codes und des erzeugten Codes.

7. Softwareentwicklungsplattform nach Anspruch 1, wobei die Konfigurationsinformationen ferner Informationen über eine UI-Komponente, die zum Zeitpunkt der Ausführung der Zielsoftware eingestellt ist, um auf einem Bildschirm ausgegeben zu werden, und Tabelleninformationen einer Datenbank beinhalten, die mit der UI-Komponente assoziiert ist, und
wobei die Ausführungsengine konfiguriert ist zum Aktualisieren eines Zustandsflagwerts von einigen einer Vielzahl von Datensätzen, die während einer Ausführung des erzeugten Codes durch die UI-Komponente ausgegeben werden, wenn ein Ereignis zum Manipulieren von einigen aus der Vielzahl von Datensätzen überwacht wird, um einen Aktualisierungsdatensatz aus der Vielzahl von Datensätzen basierend auf dem Zustandsflagwert auszuwählen, wenn eine voreingestellte Datenbankaktualisierungsbedingung erfüllt ist, und um einen Wert des Aktualisierungsdatensatzes in einer Tabelle der assoziierten Datenbank wiederzugeben.

8. Softwareentwicklungsplattform (10) nach Anspruch 7, wobei die Ausführungsengine (14) konfiguriert ist zum Zurücksetzen des Zustandsflagwerts des Aktualisierungsdatensatzes, nachdem der Wert des Aktualisierungsdatensatzes in der Tabelle wiedergegeben wurde.

9. Softwareentwicklungsplattform (10) nach Anspruch 7, wobei der Zustandsflagwert von einigen der Datensätze basierend auf einem Typ der Manipulation ermittelt wird, und wobei ein Typ einer Aktualisierungsoperation zum Wiedergeben des Werts des Aktualisierungsdatensatzes in der Tabelle basierend auf dem Zustandsflagwert des Aktualisierungsdatensatzes ermittelt wird.

10. Softwareentwicklungsplattform (10) nach Anspruch 9, wobei die Ausführungsengine (14) konfiguriert ist zum Ermitteln, ob der Aktualisierungsdatensatz in der Tabelle vorhanden ist, wenn der Zustandsflagwert des Aktualisierungsdatensatzes einen Löschungszustand anzeigt, und zum Wiedergeben des Werts des Aktualisierungsdatensatzes in der Tabelle basierend auf dem Ergebnis des Ermittelns.

11. Verfahren zum Betreiben eine Softwareentwicklungsplattform (10), dir durch mindestens eine Computervorrichtung implementiert wird, wobei das Verfahren zum Betreiben umfasst:
Bereitstellen einer auf einer grafischen Benutzeroberfläche, GUI, basierten Konfigurationsschnittstelle (20);
Empfangen von Konfigurationsinformationen (107) einer Zielsoftware durch die Konfigurationsschnittstelle (20), wobei die Konfigurationsinformationen (107 die Konfigurationsinformationen über eine Vielzahl von Elementen beinhalten, von denen mindestens ein Teil zum Konfigurieren einer gemeinsamen Komponente geeignet sind;
Erzeugen eines Codes der Zielsoftware basierend auf den Konfigurationsinformationen (107); und
Ausführen des erzeugten Codes, indem die gemeinsame Komponente verwendet wird, in der die Konfigurationsinformationen der mindestens einigen der Elemente wiedergegeben werden,
**dadurch gekennzeichnet, dass**:
die Vielzahl von Elementen Elemente zum Einstellen eines Datenfelds beinhaltet, das zur Ausführungszeit der Zielsoftware auf einem Bildschirm durch eine UI-Komponente auf einem Bildschirm ausgegeben wird, wobei die Konfigurationsinformationen (107) ferner eine Datenfeldliste (104) beinhalten, und
wobei das Ausführen des erzeugten Codes beinhaltet:
Erfassen einer Feldstruktur, die während der Ausführungszeit der Zielsoftware zu der UI-Komponente übertragen wird,
Vergleichen der Datenfeldliste (104), die in den Konfigurationsinformationen eingestellt ist, mit der erfassten Feldstruktur, und
Ermitteln, basierend auf einem Ergebnis des Vergleichs, mindestens eines Datenfelds, das durch die UI auf dem Bildschirm ausgegeben wird,
wobei das mindestens eine Datenfeld umfasst:
ein erstes Datenfeld, das sowohl in der Feldstruktur als auch in der Datenfeldliste vorhanden ist,
und
ein zweites Datenfeld, wobei das zweite Datenfeld ein Datenfeld ist, das in der Feldstruktur vorhanden ist, aber nicht in der Datenfeldliste vorhanden ist, oder
wobei das zweite Datenfeld ein Datenfeld ist, das in der Datenfeldliste vorhanden ist, aber nicht in der Feldstruktur vorhanden ist.

12. Verfahren zum Betreiben nach Anspruch 11, wobei die Konfigurationsinformationen (107) ferner Informationen über eine UI-Komponente, die zum Zeitpunkt der Ausführung der Zielsoftware eingestellt ist, um auf einem Bildschirm ausgegeben zu werden, und Tabelleninformationen einer Datenbank beinhalten, die mit der UI-Komponente assoziiert ist, und wobei das Ausführen des erzeugten Codes beinhaltet:
Überwachen eines Ereignisses zum Manipulieren von einigen aus einer Vielzahl von Datensätzen durch die UI-Komponente während einer Ausführung des erzeugten Codes;
Aktualisieren des Zustandsflagwerts von einigen der Datensätze als Reaktion auf das Überwachen des Ereignisses;
Auswählen eines Aktualisierungsdatensatzes aus der Vielzahl von Datensätzen basierend auf dem Zustandsflagwert, wenn eine voreingestellte Datenbankaktualisierungsbedingung erfüllt ist; und
Wiedergeben eines Werts des Aktualisierungsdatensatzes in einer Tabelle der assoziierten Datenbank.

## Revendications

1. Plateforme de développement de logiciel (10) comprenant :
un gestionnaire de configuration (16) configuré pour recevoir des informations de configuration (107) d'un logiciel cible par l'intermédiaire d'une interface de configuration basée sur une interface utilisateur graphique, GUI, (20) les informations de configuration (107) comprenant des informations de configuration sur une pluralité d'éléments, dont au moins certains sont destinés à configurer un composant commun ;
un générateur de code (17) configuré pour générer un code du logiciel cible sur la base des informations de configuration (107) ; et
un moteur d'exécution (14) configuré pour exécuter le code généré en utilisant le composant commun dans lequel sont reflétées les informations de configuration d'au moins certains des éléments,
**caractérisée en ce que** :
la pluralité d'éléments comprend des éléments pour définir un champ de données à sortir sur un écran par l'intermédiaire d'un composant UI au moment de l'exécution du logiciel cible, les informations de configuration (107) comprenant en outre une liste de champs de données (104), et
le moteur d'exécution (14) est configuré pour :
acquérir une structure de champs transférée au composant UI lors de l'exécution du logiciel cible,
comparer la liste de champs de données (104) définie dans les informations de configuration et la structure de champs acquise, et
déterminer au moins une sortie de champ de données vers l'écran par l'intermédiaire du composant UI sur la base d'un résultat de la comparaison,
où l'au moins un champ de données comprend :
un premier champ de données existant généralement dans la structure de champs et la liste de champs de données, et
un deuxième champ de données, le deuxième champ de données étant un champ de données existant dans la structure de champs mais n'existant pas dans la liste de champs de données, ou le deuxième champ de données est un champ de données existant dans la liste de champs de données mais n'existant pas dans la structure de champs.

2. Plate-forme de développement de logiciel (10) selon la revendication 1, dans laquelle l'interface de configuration (20) comprend une première interface de configuration à base d'assistant (30) qui fournit une fonction de réglage pour un élément de base prédéfini parmi la pluralité d'éléments.

3. Plate-forme de développement de logiciel (10) selon la revendication 2, dans laquelle l'interface de configuration (20) comprend en outre une deuxième interface de configuration (22) qui n'est pas basée sur un assistant, et
la deuxième interface de configuration (22) fournit également la fonction de réglage pour l'élément de base.

4. Plate-forme de développement de logiciel (10) selon la revendication 1, dans laquelle le gestionnaire de configuration (16) est configuré pour interroger une table associée au logiciel cible dans une base de données liée, et pour fournir une colonne de la table interrogée en tant que candidate pour le champ de données par l'intermédiaire de l'interface de configuration (20).

5. Plate-forme de développement de logiciel (10) selon la revendication 1, dans laquelle le gestionnaire de configuration (16), lorsqu'il y a un code associé au logiciel cible, est configuré pour extraire une variable définie dans le code associé et pour fournir la variable extraite en tant que candidate du champ de données.

6. Plate-forme de développement de logiciel (10) selon la revendication 1, dans laquelle le générateur de code (17) est configuré pour fournir le code généré par l'intermédiaire d'une interface de code, et
le moteur d'exécution (14) est configuré pour recevoir un code défini par l'utilisateur pour le logiciel cible par l'intermédiaire de l'interface de code, et pour exécuter ensemble le code défini par l'utilisateur et le code généré.

7. Plate-forme de développement de logiciel selon la revendication 1, dans laquelle les informations de configuration comprennent en outre des informations sur un composant d'interface utilisateur, UI, configuré pour être délivré à un écran au moment de l'exécution du logiciel cible et des informations de table d'une base de données associée au composant UI, et
le moteur d'exécution est configuré pour mettre à jour une valeur d'indicateur d'état de certains d'une pluralité d'enregistrements sortis par le composant UI pendant l'exécution du code généré, lorsqu'un événement pour manipuler certains de la pluralité d'enregistrements est surveillé, pour sélectionner un enregistrement de mise à jour parmi la pluralité d'enregistrements sur la base de la valeur d'indicateur d'état lorsqu'une condition de mise à jour de base de données prédéterminée est satisfaite, et refléter une valeur de l'enregistrement de mise à jour dans une table de la base de données associée.

8. Plate-forme de développement de logiciel (10) selon la revendication 7, dans laquelle le moteur d'exécution (14) est configuré pour réinitialiser la valeur d'indicateur d'état de l'enregistrement de mise à jour après avoir reflété la valeur de l'enregistrement de mise à jour dans la table.

9. Plate-forme de développement de logiciel (10) selon la revendication 7, dans laquelle la valeur d'indicateur d'état de certains des enregistrements est déterminée sur la base d'un type de manipulation, et un type d'opération de mise à jour pour refléter la valeur de l'enregistrement de mise à jour dans la table est déterminé sur la base de la valeur d'indicateur d'état de l'enregistrement de mise à jour.

10. Plate-forme de développement de logiciel (10) selon la revendication 9, dans laquelle le moteur d'exécution (14) est configuré pour déterminer si l'enregistrement de mise à jour existe dans la table lorsque la valeur d'indicateur d'état de l'enregistrement de mise à jour indique un état de suppression, et pour refléter la valeur de l'enregistrement de mise à jour dans la table sur la base du résultat de la détermination.

11. Procédé de fonctionnement d'une plateforme de développement de logiciel (10) mise en œuvre par au moins un dispositif informatique, le procédé de fonctionnement comprenant les étapes suivantes :
fournir une interface de configuration basée sur une interface utilisateur graphique, GUI, (20) ;
recevoir des informations de configuration (107) du logiciel cible par l'intermédiaire de l'interface de configuration (20), les informations de configuration (107) comprenant des informations de configuration sur une pluralité d'éléments, dont au moins certains sont destinés à configurer un composant commun ;
générer un code du logiciel cible sur la base des informations de configuration (107) ; et
exécuter le code généré en utilisant le composant commun dans lequel sont reflétées les informations de configuration d'au moins certains des éléments,
**caractérisé en ce que** :
la pluralité d'éléments comprend des éléments pour définir un champ de données à sortir sur un écran par l'intermédiaire d'un composant UI au moment de l'exécution du logiciel cible, les informations de configuration (107) comprenant en outre une liste de champs de données (104), et
où l'exécution du code généré comprend les étapes suivantes :
acquérir une structure de champs transférée au composant UI lors de l'exécution du logiciel cible,
comparer la liste de champs de données (104) définie dans les informations de configuration et la structure de champs acquise, et
déterminer au moins une sortie de champ de données vers l'écran par l'intermédiaire du composant UI sur la base d'un résultat de la comparaison,
où l'au moins un champ de données comprend :
un premier champ de données existant généralement dans la structure de champs et la liste de champs de données, et
un deuxième champ de données, le deuxième champ de données étant un champ de données existant dans la structure de champs mais n'existant pas dans la liste de champs de données, ou le deuxième champ de données est un champ de données existant dans la liste de champs de données mais n'existant pas dans la structure de champs.

12. Procédé de fonctionnement selon la revendication 11, dans lequel les informations de configuration (107) comprennent en outre des informations sur un composant d'interface utilisateur, UI, configuré pour être délivré à un écran au moment de l'exécution du logiciel cible et des informations de table d'une base de données associée au composant UI, et l'exécution du code généré comprend les étapes suivantes :
surveiller un événement pour manipuler certains d'une pluralité d'enregistrements à travers le composant UI lors de l'exécution du code généré ;
mettre à jour une valeur d'indicateur d'état de certains des enregistrements en réponse à la surveillance de l'événement ;
sélectionner un enregistrement de mise à jour parmi la pluralité d'enregistrements sur la base de la valeur d'indicateur d'état lorsqu'une condition de mise à jour de base de données prédéfinie est satisfaite ; et
refléter une valeur de l'enregistrement de mise à jour dans une table de la base de données associée.
